# EUROPEAN PATENT APPLICATION

(11) **EP 1 300 895 A2**
(43) Date of publication of application: **09.04.2003**
(21) Application number: 02021311.2
(22) Date of filing: 20.09.2002
(51) Int. Cl.: H01M 2/10

(54) **Closure device, particularly for a battery compartment**

(30) Priority: 04.10.2001 IT TV20010139
(71) Applicant: Check Up s.r.l., 31013 Codogne' (Treviso) (IT)
(72) Inventor: Puylaert, Jan, 20133 Milano (IT)
(74) Representative: Modiano, Guido, Dr.-Ing.

(57) **Abstract**

A closure device, particularly suitable to isolate a compartment (2) for batteries (3) suitable to power an electronic device (4), which is constituted by a cylindrical ring (6), with which a containment tray (8) for the batteries (3) is axially associated or monolithically coupled. Liquid-tight means (11) are provided perimetrically on the outer lateral surface (9) of the cylindrical ring (6) and interact with a complementarily shaped seat (12) formed in a protective cover (13) for the battery compartment (2).

## Description

The present invention relates to a closure device, particularly suitable for use for a battery compartment, and in particular for batteries that are suitable, for example, to power a portable electric or electronic device.

Electronic activation and/or control devices, such as for example a remote control, are currently in use which are powered by means of one or more batteries; said batteries are usually accommodated in a closed compartment, which can be accessed temporarily by the user to replace the drained batteries with other new ones.

Said electronic devices usually comprise a box-like frame that has a battery compartment, which in turn has a cover that is rotatably associated with an edge of the frame or can slide along guides formed on the edges of the frame, so that it can be removed temporarily by means of pressure applied in a direction that is parallel to said guides.

There are also covers provided with perimetric engagement means, which are advantageously constituted by one or more pairs of flexible wings that are associable in respective seats formed laterally to said compartment.

Covers provided with one or more through holes for connection to the battery compartment by way of threaded screws, associable in complementarily threaded dead holes formed in said compartment, are for example also usually commercially available.

The main drawback of all of the above cited known types of battery compartment is the fact that they do not allow effective protection against liquids, since they do not ensure a seal at the perimetric and interconnection regions.

This drawback is fundamentally important in the case of electronic devices that are often used in the vicinity of liquids, particularly, for example, in the field of activation and/or control devices for saunas, whirlpool baths or shower cubicles, or also in the field of devices for underwater activity.

As a partial solution to this problem, it is known to use gaskets arranged at said perimetric and interconnection regions.

For example, it is known to place an annular gasket (commonly known as O-ring) between the head of each one of the connecting screws and the perimetric edge of the respective through hole of the cover.

However, even this solution has the important drawback that it is neither practical nor easy to perform, since the user has to open and close it with great care, trying to prevent the screw and most of all the gasket from falling accidentally.

However, one of the gaskets is often lost or damaged in this operation, thus making it impossible to use the electronic device in the vicinity of liquids.

One method currently used to make an electronic device watertight consists in sealing the regions subject to water penetration, for example by applying sealing materials, such as for example silicone.

However, this remedy provides limited assurances of tightness and is moreover very difficult and troublesome to perform.

The aim of the present invention is therefore to solve the noted technical problems, eliminating the drawbacks of the cited known art and thus providing an invention that allows to obtain a closure device, particularly for a battery compartment, that allows easy and rapid access to said compartment in order to replace said batteries and at the same time ensures an effective and durable seal against liquids and particularly water.

Within the scope of this aim, an important object is to provide an invention that can be restored correctly and rapidly after each opening of the compartment.

Another important object is to provide an invention that has a high aesthetic value and at the same time is very strong and especially impact-resistant.

Another object is to provide an invention that is structurally simple and has low manufacturing costs.

This aim and these and other objects that will become better apparent hereinafter are achieved by a closure device, particularly for closing a compartment for one or more batteries suitable to power an electronic device, characterized in that it is constituted by a cylindrical ring, with which a containment tray for said one or more batteries is axially associated or monolithically coupled, liquid-tight means being associated perimetrically on the outer lateral surface of said cylindrical ring and interacting with a complementarily shaped seat formed in a protective cover for said battery compartment.

Further characteristics and advantages of the invention will become better apparent from the detailed description of a particular embodiment, illustrated only by way of non-limitative example in the accompanying drawings, wherein:
Figures 1, 2 and 3 are perspective views of an activation and control device, such as a remote control, in three successive steps of the removal of the batteries;
Figures 4, 5 and 6 are perspective views of the remote control in three other successive steps of the insertion of the batteries;
Figure 7 is a sectional perspective view of the shape of a component of the closure device;
Figures 8 and 9 are respectively a sectional top view and a sectional side view of the invention;
Figures 10 and 11 are transverse sectional views of two details of the invention.

With reference to the figures, the reference numeral 1 designates a closure device, particularly suitable to isolate a compartment 2 for containing one or more batteries, generally designated by the reference numeral 3, which are suitable to power an electric or electronic device 4.

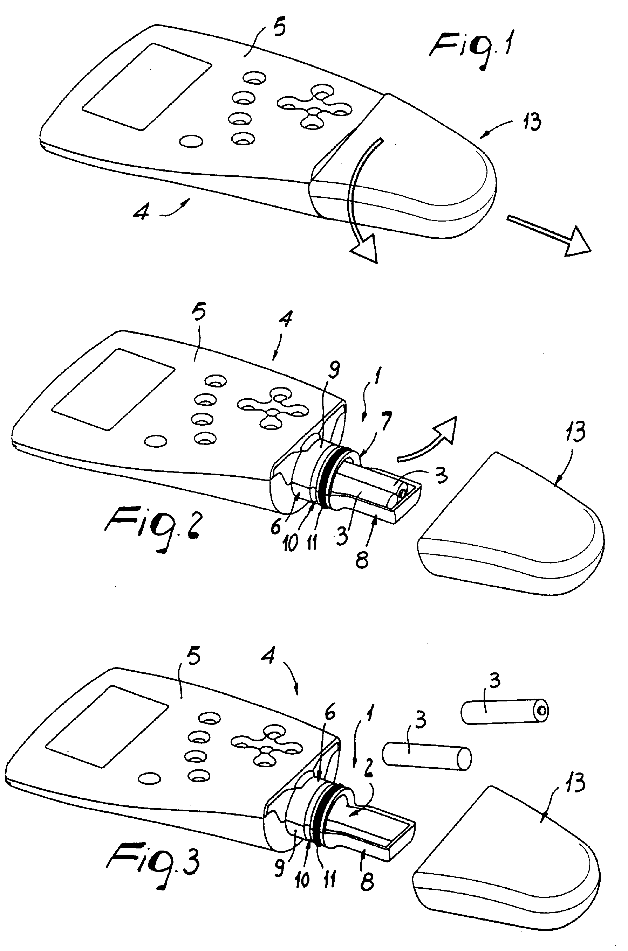

Figures 1 to 6 illustrate an electronic device that is constituted, merely by way of example, by a remote control provided with buttons and with a display screen.

The electronic circuits of the remote control 4, not shown, are contained with a protective casing, designated by the reference numeral 5, at one end of which a cylindrical ring 6 protrudes; a tray, designated by the reference numeral 8, for containing said one or more batteries 3 is axially associated with, or monolithically coupled to, the free end 7 of said ring.

Said tray 8 is advantageously approximately shell-shaped, so as to constitute, together with the cylindrical ring 6, said containment compartment 2 for the batteries 3.

The cylindrical ring 6 has, at its outer lateral surface 9, at least one perimetric recess, designated by the reference numeral 10, that is suitable to accommodate a complementarily shaped annular gasket 11, also known as O-ring, which protrudes partially beyond said outer lateral surface 9.

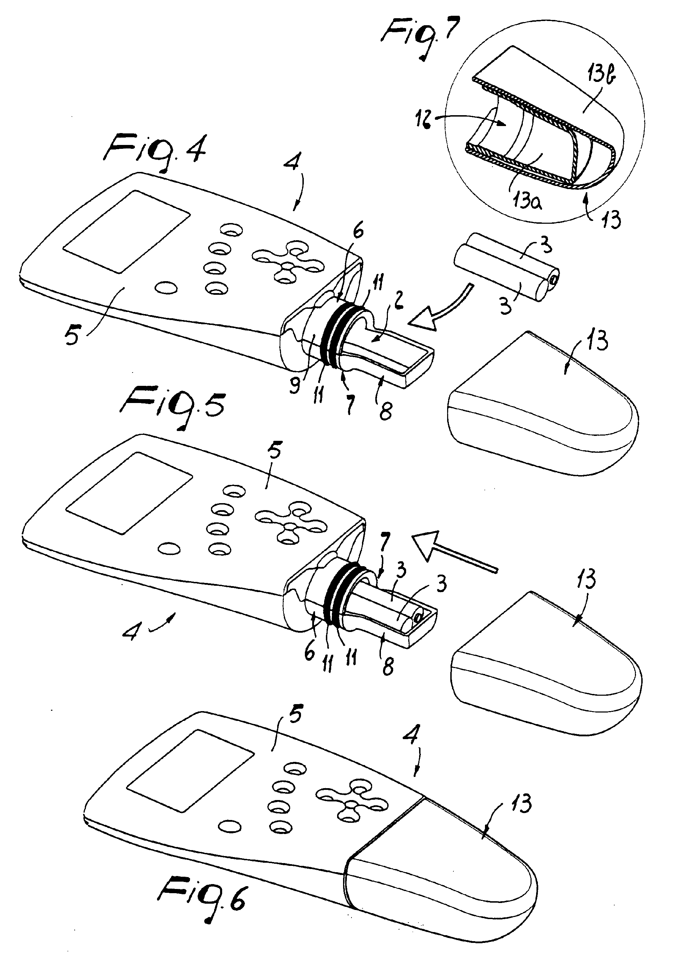

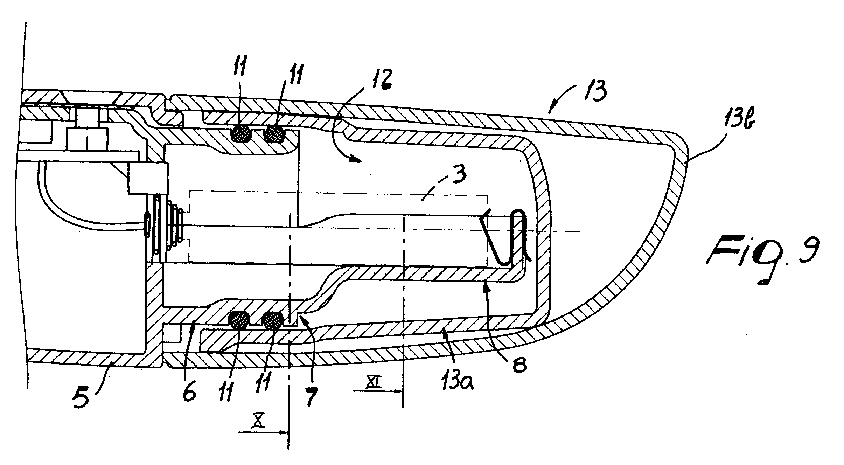

In the particular embodiment shown in Figures 4 to 9, two recesses 10 for a corresponding number of annular gaskets 11 have been formed; Figures 2 and 3 instead illustrate a remote control provided with two recesses 10 but with a single annular gasket 11.

Said annular gaskets 1 constitute liquid-tight means, since they interact with a complementarily shaped seat 12 formed in a cover or cap, designated by the reference numeral 13, which is associable with the casing 5 of the electronic device 4.

Said cover 13 constitutes a protection for said compartment 2 for the batteries 3 and at the same time ensures complete isolation of said compartment from any infiltration of water or other liquids.

In the embodiment described here, the cover 13 is constituted for example by a first cap and a second cap, designated by the reference numerals 13a and 13b, which are arranged so that the first one lies inside the second one; said caps are conveniently mutually associated or monolithically coupled by virtue of methods of a known kind, such as for example interlocking or gluing.

The first cap 13a is advantageously cylindrical, so as to form said seat 12, whose diameter is approximately equal to the outside diameter of the cylindrical ring.

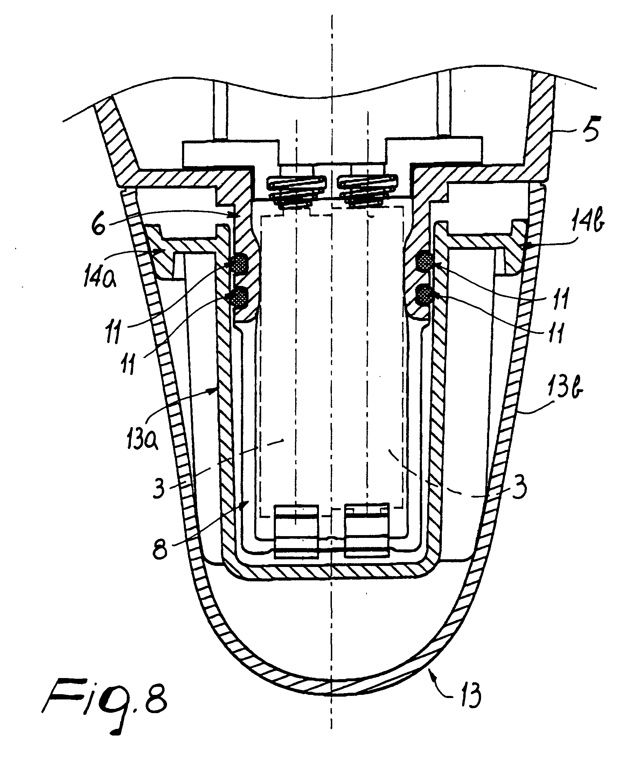

Figure 8 shows that the first cap 13a has two free wings 14a and 14b, which protrude laterally in mutually opposite positions and are suitable to ensure correct positioning and stable interconnection inside the second cap 13b.

Said second cap 13b has an appropriate shape, depending on the shape of the casing 5 of the remote control 4, so as to produce a pleasant aesthetic impact.

In this particular case, the second cap 13b has a curved shape, so that it is shaped approximately complementarily to the palm of the user's hand and is therefore ergonomic.

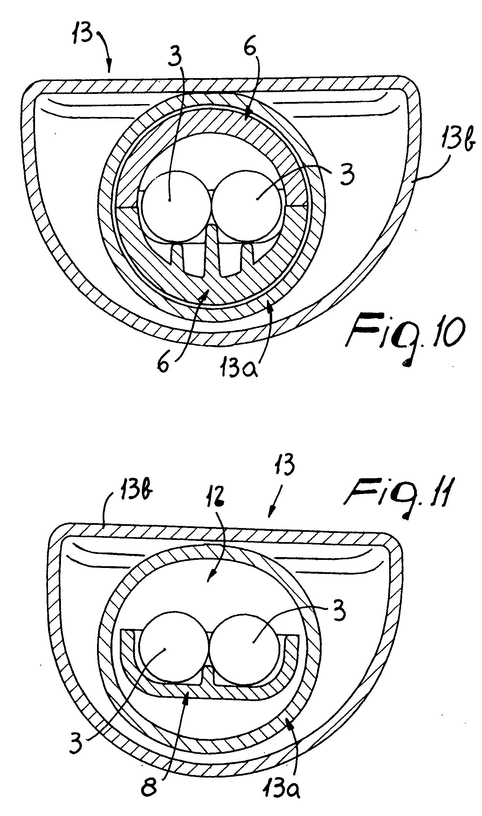

The second cap 13b advantageously has, in a transverse sectional view (Figures 10 and 11), an approximately sector-like or semicircular shape, which allows the user to easily disconnect the cover 13 and the cylindrical ring 6, since it allows to perform a combined rotary and translational motion in the directions indicated in Figure 1.

Said combined rotary and translational motion allows to remove the cover 13 with a much smaller force than required if only an axial translational motion is performed.

Operation is therefore as follows: with reference to Figures 1 to 6, the compartment 2 can be opened by simply turning and simultaneously pulling the cover 13, so as to allow the disconnection thereof from the cylindrical ring 6 that protrudes from the casing 5 of the electronic device.

Once the batteries 3 have been replaced, it is possible to restore the interconnection between the cover 13 and the cylindrical ring 6: the two annular gaskets 11, arranged between the outer surface of the ring and the inner surface of the complementarily shaped seat 12 formed in the cover 13, ensure a safe seal against the infiltration of liquids into the battery compartment.

It has thus been found that the invention has achieved the intended aim and objects, a closure device having been provided which is suitable to isolate a battery compartment and ensures optimum liquid-tightness without thereby renouncing very easy access to the compartment in case of replacement of drained batteries.

Moreover, the invention can be restored correctly in a quick and simple manner after every opening of the compartment; it also allows to provide electronic devices that have a high aesthetic value combined with great robustness.

The closure device is furthermore structurally very simple and has very low manufacturing costs.

The invention is of course susceptible of numerous modifications and variations, all of which are within the scope of the appended claims.

Thus, for example, it can be applied to any electric or electronic device, whether fixed or hand-portable, and can also comprise a single annular gasket or two gaskets or more than two.

Likewise, the dimensions and shape of the tray 8 and of the compartment 3 can be the most disparate, according to the dimensions of the batteries that can be accommodated.

The cylindrical ring 6 may also be hollow, so as to allow the partial insertion of the batteries therein, or may be a solid cylinder, the battery compartment being constituted therefore entirely by the tray 8.

The materials used, as well as the dimensions that constitute the individual components of the invention, may of course be more pertinent according to the specific requirements.

The various means for performing certain different functions need not certainly coexist only in the illustrated embodiment but can be present per se in different embodiments, including ones that are not illustrated.

The disclosures in Italian Patent Application No. TV2001A000139 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A closure device, particularly for closing a compartment (2) for one or more batteries (3) adapted to power an electronic device (4), **characterized in that** it comprises connection means (11) for hermetic and combined rotary and translational or axial and hermetic connection for a protective cover (13).

2. The device according to one or more of the preceding claims, **characterized in that** said connection means, which are advantageously approximately cylindrical, comprise liquid-tight means that are preferably constituted by gaskets (11) made of plastic material.

3. The device according to one or more of the preceding claims, **characterized in that** it comprises a cylindrical ring (6), with which a containment tray (8) for said one or more batteries (3) is axially associated or rigidly coupled, said liquid-tight means (11) being perimetrically associated on the outer lateral surface of said cylindrical ring (6), said liquid-tight means (11) interacting with a complementarily shaped seat (12) formed in the protective cover (13) for said battery compartment (2).

4. The device according to claim 3, **characterized in that** said tray (8) is associated with the free end of said cylindrical ring (6) or monolithically coupled thereto and is advantageously substantially shell-shaped.

5. The device according to one or more of the preceding claims, **characterized in that** said liquid-tight means are constituted by one or two or more annular gaskets (11), which are accommodated within respective perimetric recesses (10) formed at the outer lateral surface (9) of said cylindrical ring (6).

6. The device according to claims 1 and 5, **characterized in that** said one or more annular gaskets (11) protrude partially beyond said outer lateral surface (9) of said cylindrical ring (6), so as to interact with said complementarily shaped seat (12) of said cover (13).

7. The device according to one or more of the preceding claims, **characterized in that** said cover (13) constitutes a protection for said battery compartment (2), ensuring full isolation thereof against any infiltrations of water or other liquids.

8. The device according to one or more of the preceding claims, **characterized in that** said cover (13) is constituted by a first cap (13a) that is monolithically coupled or associated inside a second outer cap (13b).

9. The device according to claims 1 and 8, **characterized in that** said first cap (13a) is advantageously cylindrical, so as to form said seat (12), whose diameter is approximately equal to the outside diameter of said cylindrical ring (6).

10. The device according to claims 1 and 8, **characterized in that** said first cap (13a) has two free wings (14a, 14b), which protrude laterally in mutually opposite positions, so as to ensure a correct placement and a stable interconnection thereof inside said second cap (13b).

11. The device according to claims 1 and 8, **characterized in that** said second cap (13b) has a curved shape, so that it is shaped approximately complementarily to the palm of the user's hand.

12. The device according to claims 1 and 8, **characterized in that** said second cap (13b) has, in a transverse sectional view, an approximately sector-like or semicircular shape, facilitating disconnection of said cover (13) through combined rotary and translational motion thereof.

13. The device according to one or more of the preceding claims, **characterized in that** said cylindrical ring (6) is hollow, so as to constitute said battery compartment (2) together with said tray (8).
